# EUROPEAN PATENT SPECIFICATION

(11) **EP 3 299 421 B1**
(45) Date of publication and mention of the grant of the patent: **09.03.2022**
(21) Application number: 16796786.8
(22) Date of filing: 19.05.2016
(51) Int. Cl.: C08L 97/00, C08K 5/09, C08K 5/07

(54) **BINDER COMPOSITION, AND METHOD FOR BINDING FIBROUS MATERIAL BY USING SAME**
BINDEMITTELZUSAMMENSETZUNG UND VERFAHREN ZUM BINDEN VON FASERMATERIAL DAMIT
COMPOSITION DE LIANT ET PROCÉDÉ POUR LIER DE LA MATIÈRE FIBREUSE AU MOYEN DE CETTE COMPOSITION

(30) Priority: 20.05.2015 KR 20150070522
(43) Date of publication of application: 28.03.2018
(73) Proprietor: KCC Corporation, Seoul 06608 (KR)
(72) Inventor: LEE, Song Yi, Yongin-si Gyeonggi-do 16988 (KR); KIM, Sung Jun, Bucheon-si Gyeonggi-do 14591 (KR); HONG, Seung Min, Hwaseong-si Gyeonggi-do 18452 (KR); KIM, Yong Joo, Yongin-si Gyeonggi-do 16930 (KR)
(74) Representative: Cabinet Laurent & Charras
(86) International application number: PCT/KR2016/005297
(87) International publication number: WO 2016/186459

(56) References cited:
- WO-A1-2008/089847
- WO-A1-2008/089847
- JP-A- 2012 036 369
- JP-A- 2012 036 369
- KR-A- 20140 017 672
- US-A1- 2013 287 993
- US-A1- 2013 287 993
- US-B2- 8 708 162

## Description

### [Field of the invention]

The present invention relates to a binder composition and a method for binding a fibrous material by using the binder composition. More specifically, the present invention relates to a binder composition comprising a) one or more reducing sugars, b) one or more amino acids, c) one or more natural aromatic polymers, derivatives thereof, or salt compounds thereof, and d) one or more multifunctional aldehydes; and a method for binding a fibrous material using the binder composition.

### [Description of the related art]

Although a technique of binding a fibrous material using a phenol-formaldehyde resin has been developed, the technique has problems associated with the toxicity of the raw materials being used, the effluvium generated from the resin, etc. Therefore, various curing techniques employing various resins for replacing the phenol-formaldehyde resin have been researched.

Korean Registered Patent No. 240044, US Patent Publication No. 2012-0133073, Korean Laid-open Patent Application No. 1999-0037115, Korean Laid-open Patent Application No. 2008-0049012, Korean Laid-open Patent Application No. 2010-0065273, etc. disclose techniques employing raw materials derived from natural substances as binder ingredients.

However, the techniques disclosed in the above documents have a problem in that they result in lower stiffness compared to the conventional phenol-formaldehyde resin.

### [Summary of the invention]

The present invention relates to a binder composition that is eco-friendly by including natural raw materials and can improve mechanical properties (e.g., water resistance, tensile strength, and hardness), color properties, and tactile properties when used for binding a fibrous material; and a method for binding a fibrous material using the binder composition.

The binder composition according to the present invention includes one or more reducing sugars, one or more amino acids, one or more natural aromatic polymer compounds, and one or more multifunctional aldehydes.

The method for binding a fibrous material according to the present invention includes spraying the binder composition, which is an aqueous thermosetting type, on a fibrous material and heat-curing the binder composition that has been sprayed.

The present invention employs natural raw materials such as reducing sugars and amino acids and thus is eco-friendly, and can improve the utilization of natural aromatic polymer-based raw materials such as lignin, which, despite being an abundant resource by constituting a large portion of plant cell walls and wood, has limited application and is consumed as fuel or disposed of. Also, the present invention can improve the reliability and durability of the binder composition itself by taking advantage of the characteristics of natural aromatic polymers such as chemical stability and non-biodegradability and enhance the mechanical properties (e.g., water resistance, tensile strength, and hardness), color properties, and tactile properties of the fibrous product, etc. produced by binding using the binder composition.

### [Detailed description of the preferred embodiment]

Hereinafter, the present invention will be described in greater detail.

In the present invention, the caramelization reaction and the Maillard reaction, which are non-enzymatic browning reactions, are used as the main curing mechanisms.

The caramelization reaction, which is a chemical reaction that takes place up to the point where molecules begin to decompose when sugars are heated at high temperature, is a food reaction in which a dark brown monomolecular product having aromaticity is produced. Since the reaction rate is higher in reducing sugars having a lower molecular weight, raw materials such as glucose and fructose are more advantageous for the caramelization reaction.

The Maillard reaction, which is a reaction between reducing sugars and amino acids, was researched by French chemist Louis-Camille Maillard (1912), American chemist John E. Hodge (1953), etc. In the Maillard reaction, a sugar in the form of aldose or ketose having a reactive aldehyde group reacts with an amino acid in a complex manner such that various low-molecular-weight volatile organic compounds are produced by decomposition, resulting in the formation of brown, nitrogen-containing polymers referred to as melanoidins and the copolymers of melanoidins.

The binder composition according to the present invention includes one or more types of reducing sugars having three or more carbon atoms. In the present invention, the reducing sugars refer to aldose-type or ketose-type sugars either having an aldehyde or capable of attaining an aldehyde structure by isomerization and may specifically be selected from the group consisting of glucose, maltose, fructose, galactose, lactose, cellobiose, gentiobiose, rutinose, and combinations thereof, but the present invention is not limited thereto.

In the binder composition according to the present invention, the reducing sugars are included in an amount of, for example, 15 to 75 parts by weight or 30 to 70 parts by weight with respect to 100 parts by weight of the sum of reducing sugars and amino acids. In another example, the reducing sugars are included in an amount of 45 to 65 parts by weight with respect to 100 parts by weight of the sum of reducing sugars and amino acids. When the content of the reducing sugars in the binder composition is less than 15 parts by weight with respect to 100 parts by weight of the sum of reducing sugars and amino acids, a cured product of the binder composition having lower hardness may be obtained. When the content of the reducing sugars exceeds 75 parts by weight with respect to 100 parts by weight of the sum of reducing sugars and amino acids, a composition with lower stability and a curing product with a lower degree of curing may be obtained.

The binder composition according to the present invention includes one or more amino acids. In the present invention, the amino acids, which are compounds having one or more amino groups and one or more carboxyl groups in one molecule, may specifically be selected from the group consisting of glycine, alanine, valine, leucine, isoleucine, threonine, serine, cysteine, methionine, aspartic acid, asparagine, glutamic acid, diiodotyrosine, lysine, arginine, histidine, phenylalanine, tyrosine, tryptophan, proline, oxyproline, glutamine, and combinations thereof, but the present invention is not limited thereto.

In the binder composition according to the present invention, the amino acids are included in an amount of, for example, 25 to 85 parts by weight or 30 to 70 parts by weight with respect to 100 parts by weight of the sum of reducing sugars and amino acids. In another example, the amino acids are included in an amount of 35 to 55 parts by weight with respect to 100 parts by weight of the sum of reducing sugars and amino acids. When the content of the amino acids in the binder composition is less than 25 parts by weight with respect to 100 parts by weight of the sum of reducing sugars and amino acids, a composition with lower stability and a curing product with a lower degree of curing may be obtained. When the content of the amino acids in the binder composition exceeds 85 parts by weight with respect to 100 parts by weight of the sum of reducing sugars and amino acids, a cured product of the binder composition having lower hardness may be obtained.

The binder composition according to the present invention includes one or more natural aromatic polymer compounds. Specifically, the natural aromatic polymer compounds may be selected from the group consisting of lignin, tannins, flavonoids, and combinations thereof, but the present invention is not limited thereto. In the present invention, the scope of the natural aromatic polymer compounds includes not only the aromatic polymer substances obtained from natural substances such as wood but also the derivatives and salts thereof.

The natural aromatic polymer compounds may have a molecular weight of 2,000 or more (e.g., 2,000 to 100,000). When the natural aromatic polymer compounds have a molecular weight of 2,000 or more, a binder composition capable of producing a favorable effect of resulting in a fibrous product with enhanced stiffness by providing binding therefor may be obtained.

In the binder composition according to the present invention, the natural aromatic polymer compounds are included in an amount of, for example, 0.1 to 20 parts by weight or 0.5 to 10 parts by weight with respect to 100 parts by weight of the sum of reducing sugars and amino acids. In another example, the natural aromatic polymer compounds are included in an amount of 1 to 5 parts by weight with respect to 100 parts by weight of the sum of reducing sugars and amino acids. When the content of the natural aromatic polymer compounds in the binder composition is less than 0.1 part by weight with respect to 100 parts by weight of the sum of reducing sugars and amino acids, there may be a limit to the improvement in the stiffness of the cured product. When the content of the natural aromatic polymer compounds exceeds 20 parts by weight, a composition with lower stability may be produced, thus resulting in a cured product with lower water resistance and a risk of precipitation before and after the curing process.

Lignin as an example of such a natural aromatic polymer compound refers to a fat-soluble phenol polymer among various constituent ingredients of the woody part of coniferous or broad-leaved trees and has a three-dimensional polymer structure including the β-O-4 or carbon-carbon bonds of precursors, i.e., p-coumaryl alcohol, coniferyl alcohol, and sinapyl alcohol. The wood of the plant is roughly divided into cellulose, hemicellulose, and lignin. Although lignin accounts for about 30% of the entire wood of the plant, it is mostly removed or consumed as a fuel during the pulping process in the paper industry, etc. However, according to the present invention, the utilization of natural aromatic polymer-based raw materials that, like lignin, are abundant resources but are consumed as fuel or disposed of due to the limited application thereof can be improved.

The binder composition according to the present invention includes one or more multifunctional aldehydes. The multifunctional aldehydes have two or more (e.g., two to four) aldehyde functional groups and may specifically be selected from the group consisting of glutaraldehyde, glyoxal, terephthaldehyde, and combinations thereof, but the present invention is not limited thereto.

In the binder composition according to the present invention, the multifunctional aldehydes are included in an amount of, for example, 0.5 to 20 parts by weight or 1 to 15 parts by weight with respect to 100 parts by weight of the sum of reducing sugars and amino acids. In another example, the multifunctional aldehydes are included in an amount of 2 to 10 parts by weight with respect to 100 parts by weight of the sum of reducing sugars and amino acids. When the content of the multifunctional aldehydes in the binder composition is less than 0.5 part by weight with respect to 100 parts by weight of the sum of reducing sugars and amino acids, a composition with undesirable curing ability and a cured product exhibiting undesirable water resistance, durability, etc. may be obtained. When the content of the multifunctional aldehydes exceeds 20 parts by weight, a composition with a lower curing rate and a cured product exhibiting less desirable overall material properties may result.

In addition to the ingredients listed above, the binder composition according to the present invention further includes a pH adjusting agent for enhancing the water solubility of natural aromatic polymer compounds such as lignin. The pH adjusting agent is selected from ammonia, sodium hydroxide, potassium hydroxide, sodium carbonate, potassium carbonate, silanes, amino alcohols, polyamines, and combinations thereof, but the present invention is not limited thereto.

In addition, the binder composition according to the present invention further includes a high-boiling-point acid compound having a boiling point of 300 °C or more (e.g., 300 to 500 °C) under the conditions of normal temperature and normal pressure (i.e., 25 °C, 1 atm). Such a high-boiling-point acid compound may be used for increasing the solubility of the amino acids in water and sprayed on a fibrous aggregate for increasing the rate of a curing reaction in a high-temperature baking process. Also, the high-boiling-point acid compound may be a compound that has a boiling point of 300 °C or more under the conditions of normal temperature and normal pressure so that the volatilization thereof during a high-temperature curing reaction can be prevented. Examples of such a high-boiling-point acid compound are sulfuric acid, phosphoric acid, carboxylic acid, and organic sulfonic acid, and such a high-boiling point acid compound may be in the form of a single molecule, a dimer, a trimer, an oligomer, or a polymer, without being limited to a particular form. In some cases, the high-boiling-point acid compound may be neutralized with an amine compound or ammonia for use.

When the binder composition according to the present invention includes the high-boiling-point acid compound, the high-boiling-point acid compound may be included in an amount of, for example, 0.01 to 5 parts by weight or 0.1 to 3 parts by weight with respect to 100 parts by weight of the sum of reducing sugars and amino acids. In another example, the high-boiling-point acid compound may be included in an amount of 0.5 to 1 parts by weight. When the content of the high-boiling-point acid compound in the binder composition is less than 0.01 part by weight with respect to 100 parts by weight of the sum of reducing sugars and amino acids, a lower degree of curing may result. When the content of the high-boiling-point acid compound exceeds 5 parts by weight, a cured product that is likely to break may be obtained.

The binder composition according to the present invention may further include one or more optional additives in addition to the ingredients described above as necessary, within the scope that the present invention can be achieved. Examples of a useful additive that may be additionally used include a catalyst capable of aiding the dehydrating action of the curing reaction, a water repelling agent for enhancing the water resistance of the fibrous aggregate, a corrosion inhibitor for preventing the corrosion of equipment, an anti-dust oil for reducing dust generation, a buffer, a coupling agent for improving adhesion, and a curing agent for improving the mechanical properties of the cured product, but the present invention is not limited thereto, and an additive commonly used in the art may be used. Also, the amount of such an additional additive is not particularly limited. Each of the additives may be included in an amount of, for example, 0.01 to 5 parts by weight with respect to 100 parts by weight of the sum of reducing sugars and amino acids, but the present invention is not limited thereto.

Reducing sugars and amino acids, which are main ingredients of the binder composition according to the present invention, are obtained by the hydrolysis or fermentation of starch, molasses, etc. extracted from plants, are safe from depletion, and yield a minimum amount of carbon dioxide when being produced or disposed of. In addition, the final fibrous product produced using such a binder composition does not contain toxic substances.

When the binder composition according to the present invention is heat-treated, for example, at a temperature of 120 °C or more, various curing reactions such as the caramelization reaction involving only the reducing sugars, the Maillard reaction involving Amadori intermediates formed between the aldehyde group of a reducing sugar and the amine group of an amino acid, a self-amide reaction of an amino acid occurring between the carboxylic acid group and the amine group, an ester reaction occurring between the hydroxy group of a reducing sugar and the carboxylic acid group of an amino acid take place, thereby forming a water-insoluble polymer. Therefore, the binder composition according to the present invention can be used as an adhesive exhibiting the finest material properties such as water resistance.

Therefore, another aspect of the present invention provides a method for binding a fibrous material including spraying the aqueous thermosetting binder composition according to the present invention on a fibrous material and heat-curing the binder composition that has been sprayed; and the fibrous material bound by the aqueous thermosetting binder composition according to the present invention.

The fibrous material refers to an aggregate of short fibers, wherein the examples of such short fibers include short fibers having a length of 1 to 150 mm and a thickness of 0.1 to 10 µm and are, for example, inorganic fibers (e.g., rockwool, glass wool, and ceramic fibers) or fibers obtained from a natural resin or synthetic resin.

In the method for binding a fibrous material according to the present invention, the aqueous thermosetting binder composition is sprayed, as an uncured aqueous solution or aqueous dispersion, on the fibrous material.

Next, the fibrous material aggregate on which the binder composition was sprayed is subjected to heat treatment to heat cure the binder composition. The heat treatment temperature for curing is 120 °C or more (e.g., 120 to 300 °C, 150 to 250 °C, or 180 to 220 °C). When the heat treatment temperature is excessively low, insufficient curing occurs, thus requiring a long curing time and greatly affecting productivity. On the other hand, when the heat treatment temperature is excessively high, over-curing occurs, and the caramelization reaction becomes the dominant reaction mechanism, possibly resulting in significantly poor tensile properties and causing carbonization and dust generation.

The content of the cured binder in the fibrous material in a bound state according to the present invention is, for example, 2 to 20 parts by weight with respect to a total of 100 parts by weight of the fibrous material in a bound state.

Hereinafter, the present invention will be described in greater detail with reference to examples. However, the examples are provided to help understanding of the present invention, and the scope of the present invention is not limited to the examples in any sense.

### [Examples]

### Example 1 (comparative)

450 kg of fresh water was added to a container for binder production, and the pH was adjusted to a range of 8 to 14 using ammonia water. Then, 0.1 kg of gammaaminopropyltriethoxysilane (silane A-1100 available from DOW CHEMICAL), 1.5 kg of lignin (Borresperse AM 320, MW = 20,000 to 50,000 available from Borregaard), and 2 kg of glutaraldehyde (glutaraldehyde solution 50 wt% in H₂O available from Sigma-Aldrich Co. LLC.) were added to the container as coupling agents, and the mixture was stirred for about ten minutes. Subsequently, 22 kg of D-glucose monohydrate (solid content: 91 wt%) and 20 kg of lysine (solid content: 98 wt%) were added to the container, and the mixture was stirred for 30 minutes until dissolution was confirmed. Then, 0.4 kg of a silicone-based water repelling agent (SI1460Z available from KCC Corporation) and 1 kg of an anti-dust oil (Garo^{®} 217/S available from Govi) were further added to the container, and the mixture was stirred for about ten minutes to produce a binder.

### Example 2 (comparative)

450 kg of fresh water was added to a container for binder production, and the pH was adjusted to a range of 8 to 14 using ammonia water. Then, 0.1 kg of gammaaminopropyltriethoxysilane (silane A-1100 available from DOW CHEMICAL.), 1.5 kg of lignin (Dewatered lignin available from Domtar Corporation), and 2 kg of glutaraldehyde (glutaraldehyde solution 50 wt% in H₂O available from Sigma-Aldrich Co. LLC.) were added to the container, and the mixture was stirred for about ten minutes. Subsequently, 21 kg of D-fructose (solid content: 99 wt%) and 19 kg of glutamine (solid content: 98 wt%) were added to the container, and the mixture was stirred for 30 minutes until dissolution was confirmed. Then, 0.4 kg of a silicone-based water repelling agent (SI1460Z available from KCC Corporation) and 1 kg of an anti-dust oil (Garo^{®} 217/S available from Govi) were further added to the container, and the mixture was stirred for about ten minutes to produce a binder.

### Example 3 (comparative)

450 kg of fresh water was added to a container for binder production, and the pH was adjusted to a range of 8 to 14 using ammonia water. Then, 0.1 kg of gammaaminopropyltriethoxysilane (silane A-1100 available from DOW CHEMICAL), 1.5 kg of lignin (wheat straw lignin available from WuXi lansen Chemicals Co., Ltd.), and 2 kg of glutaraldehyde (glutaraldehyde solution 50 wt% in H₂O available from Sigma-Aldrich Co. LLC.) were added to the container, and the mixture was stirred for about ten minutes. Subsequently, 21 kg of D-fructose (solid content: 99 wt%) and 19 kg of glutamine (solid content: 98 wt%) were added to the container, and the mixture was stirred for 30 minutes until dissolution was confirmed. Then, 0.4 kg of a silicone-based water repelling agent (SI1460Z available from KCC Corporation) and 1 kg of an anti-dust oil (Garo^{®} 217/S available from Govi) were further added to the container, and the mixture was stirred for about ten minutes to produce a binder

Further Comparative Example 1: Phenol-formaldehyde binder 40 kg of a phenol-formaldehyde binder (HN7310A available from KCC Corporation), 380 kg of distilled water, 0.5 kg of a water repelling agent (SI1460Z available from KCC Corporation), and 1 kg of an anti-dust oil (Garo^{®} 217/S available from Govi) were added to a production container, and the mixture was stirred for 30 minutes to produce a binder.

Further Comparative Example 2 450 kg of fresh water was added to a container, 0.1 kg of gammaaminopropyltriethoxysilane (silane A-1100 available from DOW CHEMICAL) was added to the container, and the mixture was stirred for about ten minutes. Then, 37 kg of D-glucose monohydrate (solid content: 91 wt%) and 10 kg of glutamine (solid content: 98 wt%) were added to the container, and the mixture was stirred. The pH of the mixture was adjusted to a range of 8 to 14 using ammonia water, then 0.4 kg of a silicone-based water repelling agent (SI1460Z available from KCC Corporation) and 1 kg of an anti-dust oil (Garo^{®} 217/S available from Govi) were further added to the container, and the mixture was stirred for about ten minutes to produce a binder.

Further Comparative Example 3 450 kg of fresh water was added to a container for binder production, and the pH was adjusted to a range of 8 to 14 using ammonia water. Then, 0.1 kg of gammaaminopropyltriethoxysilane (silane A-1100 available from DOW CHEMICAL) and 1.5 kg of lignin (Borresperse AM 320 available from Borregaard) were added to the container, and the mixture was stirred for about ten minutes. Subsequently, 22 kg of D-glucose monohydrate (solid content: 91 wt%) and 20 kg of lysine (solid content: 98 wt%) were added to the container, and the mixture was stirred for 30 minutes until dissolution was confirmed. Then, 0.4 kg of a silicone-based water repelling agent (SI1460Z available from KCC Corporation) and 1 kg of an anti-dust oil (Garo^{®} 217/S available from Govi) were further added to the container, and the mixture was stirred for about ten minutes to produce a binder.

### Experimental Example

Glass-fiber-based bare wool prepared without spraying a binder thereon was selected and prepared into a size of 100 mm (width) x 100 mm (length) and a weight of 5 g. The specimens had an average fiber density of 24 kg/m3, the initial thickness thereof measured when not containing a binder ranged from 10 to 20 mm, and the thickness of all specimens was maintained within 0.4 mm from the initial thickness throughout binder impregnation and curing processes. The bare wool specimens were dipped into the binder solutions prepared according to the examples and comparative examples, the residual binder solutions were removed under reduced pressure so that a uniform amount of the binder was contained in the specimens, and then the binder was dried and cured at a temperature ranging from 180 to 220 °C to prepare woolpack specimens for the material characterization tests described below.

### Stiffness

One end of the woolpack specimens was fixed, and the angle at which the other end deflects was measured to determine stiffness. The result of comparing the specimens for stiffness is provided in the following Table 1.

### Tensile strength

Five woolpack specimens measuring 20 mm (width) x 100 mm (length) x 0.4 mm (thickness) were prepared. The crossheads of a tensile tester were controlled such that the distance therebetween was shorter than the length of a specimen, and the specimen was clamped by the crossheads such that the top surface of the specimen laid parallel to the ground and the body of the specimen was aligned vertically. The tensile tester was operated after setting the operating speed at 25 mm/min and zeroing the load display. After the tester stopped automatically, the maximum load was measured, and the mean value of three measurements out of five measurements excluding maximum and minimum values was determined. The result is provided in the following Table 1.

### Water resistance

The woolpack specimens were floated in a beaker containing 2000 mL of fresh water for 24 hours to test water resistance. The color of the fresh water changed in the presence of an uncured product, and the degree in which the color changed was quantified in accordance with the Gardner colorimetric scale. Also, the extent and manner in which the specimens were wet with the fresh water, as well as the time taken for the specimens to sink, were determined. The result is provided in the following Table 1 (examples 1-3 being comparative and comparative examples 1-3 being further comparative examples 1-3).

**[Table 1]**

| | | Example 1 | Example 2 | Example 3 | Comparative Example 1 | Comparative Example 2 | Comparative Example 3 |
|---|---|---|---|---|---|---|---|
| Stiffness | | 5° | 5° | 5° | 10° | 15° | 15° |
| Tensile strength [kg/mm²] | Woolpack 1 | 0.56 | 0.66 | 0.42 | 0.45 | 0.17 | 0.17 |
| | Woolpack 2 | 0.44 | 0.76 | 0.58 | 0.62 | 0.59 | 0.41 |
| | Woolpack 3 | 0.68 | 0.76 | 0.91 | 0.18 | 0.61 | 0.53 |
| | Woolpack 4 | 0.90 | 0.95 | 0.70 | 0.40 | 0.15 | 0.39 |
| | Woolpack 5 | 0.72 | 0.99 | 0.86 | 0.41 | 0.44 | 0.62 |
| | Average | 0.65 | 0.82 | 0.71 | 0.42 | 0.40 | 0.44 |
| Water resistance | Condition | Good | Good | Good | Good | Good | Slightly low |
| | Color | 0 | 0 | 0.5 | 0.5 | 0.5 | 1 |

## Claims

1. A binder composition, comprising
one or more reducing sugars,
one or more amino acids,
one or more natural aromatic polymer compounds, and
one or more multifunctional aldehydes,
wherein with respect to 100 parts by weight of the sum of the reducing sugars and amino acids, the one or more natural aromatic polymer compounds are included in an amount of 0.1 to 20 parts by weight, and the multifunctional aldehydes are included in an amount of 0.5 to 20 parts by weight,
wherein the binder composition further comprises a high-boiling-point acid compound having a boiling point of 300 °C or more under conditions of normal temperature and normal pressure in an amount of 0.01 to 5 parts by weight, with respect to 100 parts by weight of the sum of the reducing sugars and amino acids,
wherein the high-boiling-point acid compound is selected from the group consisting of sulfuric acid, phosphoric acid, carboxylic acid, and organic sulfonic acid, and
wherein the binder composition further comprises a pH adjusting agent.

2. The binder composition according to claim 1, wherein the reducing sugars are selected from the group consisting of glucose, maltose, fructose, galactose, lactose, cellobiose, gentiobiose, rutinose, and combinations thereof.

3. The binder composition according to claim 1, wherein the amino acids are selected from the group consisting of glycine, alanine, valine, leucine, isoleucine, threonine, serine, cysteine, methionine, aspartic acid, asparagine, glutamic acid, diiodotyrosine, lysine, arginine, histidine, phenylalanine, tyrosine, tryptophan, proline, oxyproline, glutamine, and combinations thereof.

4. The binder composition according to claim 1, wherein the natural aromatic polymer compounds are selected from the group consisting of lignin, tannins, flavonoids, and combinations thereof.

5. The binder composition according to claim 1, wherein the natural aromatic polymer compounds have a molecular weight of 2,000 or more.

6. The binder composition according to claim 1, wherein the multifunctional aldehydes are selected from the group consisting of glutaraldehyde, glyoxal, terephthaldehyde, and combinations thereof.

7. The binder composition according to claim 1, further comprising one or more additives selected from the group consisting of catalysts, water repelling agents, corrosion inhibitors, anti-dust oils, buffers, coupling agents, and curing agents.

8. A method for binding a fibrous material, the method comprising:
spraying the binder composition according to any one of claims 1 to 7 on a fibrous material; and
heat-curing the binder composition that has been sprayed.

9. The fibrous material bound by the binder composition according to any one of claims 1 to 7.

## Patentansprüche

1. Eine Bindemittelzusammensetzung, bestehend aus
einem oder mehreren reduzierenden Zuckern,
einer oder mehreren Aminosäuren,
einer oder mehreren aromatischen Polymerverbindungen und
einem oder mehreren multifunktionellen Aldehyden,
wobei bezogen auf 100 Gewichtsteile der Summe der reduzierenden Zucker and Aminosäuren, die eine oder mehreren natürlichen aromatischen Polymerverbindungen in einer Menge von 0.1 bis 20 Gewichtsteilen enthalten sind und die multifunktionellen Aldehyde in einer Menge von 0.5 bis 20 Gewichtsteilen enthalten sind,
wobei die Bindemittelzusammensetzung weiterhin eine hochsiedende Säureverbindung enthält, mit einem Siedepunkt von 300 °C oder höher unter normalen Temperaturbedingungen und normalem Druck in einer Menge von 0.01 bis 5 Gewichtsteilen, bezogen auf 100 Gewichtsteile der Summe der reduzierenden Zucker und Aminosäuren,
wobei die hochsiedende Säureverbindung ausgewählt wird aus der Gruppe bestehend aus Schwefelsäure, Phosphorsäure, Carboxylsäure und organischer Sulfonsäure, und
wobei die Bindemittelzusammensetzung weiterhin ein Mittel zur Einstellung des pH-Wertes enthält.

2. Bindemittelzusammensetzung nach Anspruch 1, wobei die reduzierenden Zucker ausgewählt werden aus der Gruppe bestehend aus Glucose, Maltose, Fruktose, Galaktose, Laktose, Cellobiose, Gentiobiose, Rutinose, und Kombinationen daraus.

3. Bindemittelzusammensetzung nach Anspruch 1, wobei die Aminosäuren ausgewählt werden aus der Gruppe bestehend aus Glycin, Alanin, Valin, Leucin, Isoleucin, Threonin, Serin, Cystein, Methionin, Asparaginsäure, Glutaminsäure, Dijodotyrosin, Lysin, Arginin, Histidin, Phenylalanin, Tyrosin, Tryptophan, Prolin, Oxyprolin, Glutamin, und Kombinationen daraus.

4. Bindemittelzusammensetzung nach Anspruch 1, wobei die natürlichen aromatischen Polymerverbindungen ausgewählt werden aus der Gruppe bestehend aus Lignin, Tanninen, Flavonoiden und Kombinationen daraus.

5. Bindemittelzusammensetzung nach Anspruch 1, wobei die natürlichen aromatischen Polymerverbindungen ein Molekulargewicht von 2.000 oder mehr haben.

6. Bindemittelzusammensetzung nach Anspruch 1, wobei die multifunktionellen Aldehyde ausgewählt werden aus der Gruppe bestehend aus Glutaraldehyd, Glyoxal, Terephthaldehyd, und Kombinationen daraus.

7. Bindemittelzusammensetzung nach Anspruch 1, weiterhin umfassend einen oder mehrere Zusatzstoffe, ausgewählt aus der Gruppe bestehend aus Katalysatoren, wasserabweisenden Mitteln, Korrosionsschutzmittel, staubabweisende Öle, Puffer, Haftvermittler und Härter.

8. Ein Verfahren zum Binden von Fasermaterial, wobei das Verfahren umfasst:
Aufsprühen der Bindemittelzusammensetzung gemäß irgendeinem der Ansprüche 1 bis 7 auf ein Fasermaterial; und
Warmhärten der aufgesprühten Bindemittelzusammensetzung.

9. Das durch die Bindemittelzusammensetzung gebundene Fasermaterial gemäß irgendeinem der Ansprüche 1 bis 7.

## Revendications

1. Composition de liant, comprenant :
un ou plusieurs sucres réducteurs,
un ou plusieurs acides aminés,
un ou plusieurs composés polymères aromatiques naturels, et
un ou plusieurs aldéhydes multifonctionnels,
dans laquelle, par rapport à 100 parties en poids de la somme des sucres réducteurs et des acides aminés, les uns ou plusieurs composés polymères aromatiques naturels sont inclus en une quantité de 0,1 à 20 parties en poids, et les aldéhydes multifonctionnels sont inclus en une quantité de 0,5 à 20 parties en poids,
dans laquelle la composition de liant comprend en outre un composé acide à point d'ébullition élevé ayant un point d'ébullition de 300°C ou plus dans des conditions de température normale et de pression normale en une quantité de 0,01 à 5 parties en poids, par rapport à 100 parties en poids de la somme des sucres réducteurs et des acides aminés,
dans laquelle le composé acide à point d'ébullition élevé est choisi dans le groupe constitué de l'acide sulfurique, de l'acide phosphorique, de l'acide carboxylique et de l'acide sulfonique organique, et
la composition de liant comprenant en outre un agent d'ajustement de pH.

2. Composition de liant selon la revendication 1, dans laquelle les sucres réducteurs sont choisis dans le groupe constitué de glucose, de maltose, de fructose, de galactose, de lactose, de cellobiose, de gentiobiose, de rutinose, et de combinaisons de ceux-ci.

3. Composition de liant selon la revendication 1, dans laquelle les acides aminés sont choisis dans le groupe constitué de glycine, d'alanine, de valine, de leucine, d'isoleucine, de thréonine, de sérine, de cystéine, de méthionine, d'acide aspartique, d'asparagine, d'acide glutamique, de diiodotyrosine, de lysine, d'arginine, d'histidine, de phénylalanine, de tyrosine, de tryptophane, de proline, d'oxyproline, de glutamine, et de combinaisons de ceux-ci.

4. Composition de liant selon la revendication 1, dans laquelle les composés polymères aromatiques naturels sont choisis dans le groupe constitué de lignine, de tanins, de flavonoïdes et de combinaisons de ceux-ci.

5. Composition de liant selon la revendication 1, dans laquelle les composés polymères aromatiques naturels ont un poids moléculaire de 2 000 ou plus.

6. Composition de liant selon la revendication 1, dans laquelle les aldéhydes multifonctionnels sont choisis dans le groupe constitué de glutaraldéhyde, de glyoxal, de téréphtaldéhyde et de combinaisons de ceux-ci.

7. Composition de liant selon la revendication 1, comprenant en outre un ou plusieurs additifs choisis dans le groupe constitué de catalyseurs, d'agents hydrofuges, d'inhibiteurs de corrosion, d'huiles anti-poussière, de tampons, d'agents de couplage et d'agents de durcissement.

8. Procédé pour lier un matériau fibreux, le procédé comprenant l'étape consistant à :
pulvériser la composition de liant selon l'une quelconque des revendications 1 à 7 sur un matériau fibreux ; et
faire durcir à chaud la composition de liant qui a été pulvérisée.

9. Matériau fibreux lié par la composition de liant selon l'une quelconque des revendications 1 à 7.
